# EUROPEAN PATENT SPECIFICATION

(11) **EP 3 335 330 B1**
(45) Date of publication and mention of the grant of the patent: **07.04.2021**
(21) Application number: 16747611.8
(22) Date of filing: 02.08.2016
(51) Int. Cl.: H04B 7/185

(54) **APPARATUS AND METHOD FOR COMMUNICATIONS MANAGEMENT**
VORRICHTUNG UND VERFAHREN FÜR KOMMUNIKATIONSVERWALTUNG
APPAREIL ET PROCÉDÉ DE GESTION DE COMMUNICATIONS

(30) Priority: 13.08.2015 GB 201514452; 02.09.2015 EP 15183519
(43) Date of publication of application: 20.06.2018
(73) Proprietor: BAE Systems PLC, London SW1Y 5AD (GB)
(72) Inventor: HUDSON, Peter Noble, Preston Lancashire PR4 1AX (GB); EISSA, Rania Hamdi, Preston Lancashire PR4 1AX (GB)
(74) Representative: BAE SYSTEMS plc Group IP Department
(86) International application number: PCT/GB2016/052374
(87) International publication number: WO 2017/025714

(56) References cited:
- US-A1- 2007 064 604
- US-A1- 2013 095 822

## Description

This invention relates generally to an apparatus and method for communications and information management and, more particularly, but not necessarily exclusively, to an apparatus and method for management of wireless data communications resources between a moving platform and at least one target.

There are many applications in which it is required to apply a level of management in respect of wireless communications and the management of information, particularly between a moving platform and a remote target, and maintain adequate wireless communications therebetween for safe operation of the moving platform and mission success.

For example, in the case of aerial vehicles and, more particularly, unmanned aerial vehicles (UAVs), there is an ongoing and stringent requirement to maintain an adequate communication link between the aerial vehicle and a ground station, for example, and unexpected loss or degradation of such a communication link can be catastrophic.

A UAS is composed of three main parts, the unmanned air vehicle (UAV), unmanned control station (UCS) and support systems of the UAS (for pre-mission planning). A UAS Mission System may be composed of the following functional components/subsystems: Mission Management, Communications, Vehicle Health, Navigation System, Airspace Integration, Payload and Power Management. Multiple, different dynamic in-mission planners may reside in one or more of the above-mentioned functional components/subsystems. In a typical UAV, a dynamic route planner generates a new route, in real time, when there is a change in the operational environment, e.g. severe weather, threat, or a change of circumstances, e.g. an emergency, or a dynamic manoeuvre plan is generated to avoid an airborne obstacle. The aim is thus to maintain safety and the survivability of the aircraft by determining a feasible route and/or manoeuvre in real time, while avoiding pop-up, static and dynamic obstacles, for example.

However, the operational environment of moving platforms, at least in some applications, can be particularly challenging from a communications perspective. Links can be volatile and link quality can significantly change, without prior warning. The quality of a link can change dynamically, due to interference, jammers and weather, for example. As a result, the quality of the link can become degraded, thus affecting the available network bandwidth. Hence the network bandwidth needs to be managed and platform applications need to react to the changes, making efficient use of the available bandwidth.

Data and information from various platform applications can have different bandwidth requirements, but other considerations also need to be taken into account, including issues such as priority and latency. Data and information from some platform applications, for example, maybe mission critical or essential, whereas data or information from other platform applications may not be. Data and information from some platform applications, whether mission critical or otherwise, may be time sensitive and virtually worthless if its transmission is delayed, whereas other data or information may not be.

US2007/064604 describes a communications system whereby data from a plurality of sources is transmitted over a single communications link via a communications device, wherein the communications device knows what proportion of the bandwidth to allocate to data for each of the data sources, monitors the available bandwidth on the communications link and transmits the data from the various sources over the communications link, utilising the respective proportion of the available bandwidth at any time. However, this arrangement does not take into account that each of a plurality of platform applications may be transmitting data autonomously and directly to one or more respective recipient nodes over different respective communications links, nor does it take into account that different data from a single platform application may have a different respective priority or time sensitivity.

US2013/095822 relates to configuring controllers on mobile vessels to provide appropriate communications bandwidth based on the number of mobile vessels served by a particular communications satellite.

It would, therefore, be desirable to provide an intelligent communications system that is able to adapt and respond dynamically to unexpected events, and provide a method whereby various platform applications can dynamically manage their information and/or data according to available network resources.

It is, therefore, an object of at least some aspects of the present invention to address at least one or more of these issues and, in accordance with a first aspect of the invention, there is provided a data communications apparatus for a vehicle, the apparatus comprising a plurality of platform applications, a communications system, and a data management module, the communications system being configured to cause data from each said platform application to be transmitted, via wireless data communication, to at least one recipient node via a respective one or more allocated or associated communication links of a plurality of supported communications links, said data management module being configured to:
- receive performance data indicative of a current available bandwidth of each communications link allocated to or associated with said platform applications;
- for each said platform application, identify data to be transmitted thereby to a recipient node, and compare a bandwidth requirement of data to be transmitted with the current available bandwidth of the respective communications link allocated thereto or associated therewith; and
- in the event that, as a result of said comparing, the current available bandwidth of the respective communications link is determined to be insufficient in relation to the bandwidth requirement of one of its associated platform applications, generate information data and transmit said information data to the platform application, or a quality of service interface associated therewith;
wherein each said platform application, or a quality of service interface associated therewith, is configured, upon receipt of said information data, to adapt at least one parameter of its respective application data to said current available bandwidth of its respective communications link for transmission to a recipient node.

In an exemplary embodiment, the data management module may be configured to use said performance data to identify a change in available bandwidth of said communications link, determine if said current available bandwidth is within an acceptable bandwidth range of the platform application and, if so, generate a control signal including said information data, said control signal being configured, upon receipt thereof by the platform application, to cause the platform application to adapt at least one parameter of its respective application data to said current available bandwidth of its respective communications link for transmission to a recipient node.

The data management module may be configured to provide, to the platform application, data indicative of said current available bandwidth, thereby enabling the platform application to adapt said at least one parameter of the application data to said current available bandwidth.

The data management module may be configured to provide, to a Quality of Service interface associated with the platform application, data indicative of said current available bandwidth.

The performance data may comprise current bandwidth data in respect of said respective communications link and/or a performance indicator representative of a current status of said respective communications link, wherein, optionally, the performance indicator comprises one of a plurality of discrete statuses

The above-mentioned adapting said at least one parameter of said platform application data may comprise compressing said data, adapting the transmission rate of the platform application from which said data is received, and/or selecting a type or portion of said data to be transmitted.

In an exemplary embodiment, the apparatus may comprise a bandwidth monitoring module for monitoring the current available bandwidth of the respective one or more communications links allocated or associated with said plurality of platform applications, wherein said data management module is configured to receive data from said bandwidth monitoring module and detect a change in current available bandwidth of said one or more communications links.

The data management module may be further configured to determine if said current available bandwidth is within an acceptable bandwidth range of each respective platform application and, if so, generate a control signal including said information data, said control signal being configured, upon receipt thereof by the platform application, to cause the platform application to adapt at least one parameter of its respective application data to said current available bandwidth of its respective communications link for transmission to a recipient node.

In accordance with another aspect of the present invention, there is provided a method of operating a data communications apparatus for management of data communications in a vehicle, the data communications apparatus comprising a plurality of platform applications and a communications system, the communications system being configured to cause data from each said platform application to be transmitted, via wireless data communication, to at least one recipient node via a respective one or more allocated or associated communication links of a plurality of supported communications links, the method comprising:
- receiving performance data indicative of a current available bandwidth of each communications link allocated to or associated with said platform applications;
- identifying, for each platform application, data to be transmitted thereby to a recipient node, and comparing a bandwidth requirement of data to be transmitted with the current available bandwidth of the respective communications link allocated thereto or associated therewith;
- in the event that, as a result of said comparing, a current available bandwidth of the respective communications link is determined to be insufficient in relation to the bandwidth requirement of one of its associated platform applications, generating information data and transmitting said information data to the platform application, or a quality of service interface associated therewith;
- adapting, by the specified platform application, or said quality of service interface associated therewith, upon receipt of said information data, at least one parameter of its respective application data to said current available bandwidth of its respective communications link for transmission to a recipient node.

These and other aspects of the present invention will be apparent from the following specific description in which embodiments of the present invention are described, by way of examples only, and with references to the accompanying drawings, in which
Figure 1 is a schematic block diagram illustrating a moving platform system, including apparatus according to an exemplary embodiment of the present invention;
Figure 2 is a schematic block diagram illustrating some principal features of the moving platform system of Figure 1 in more detail.
Figure 3A is a schematic block diagram illustrating the data connections of an intelligent communication management system, including apparatus according to an exemplary embodiment of the present invention, in an air-based system.
Figure 3B is a schematic block diagram illustrating the data connections of an intelligent communication management system, including apparatus according to an exemplary embodiment of the present invention, in a ground-based system/airborne control station;
Figure 4 is a schematic block diagram illustrating a communications executive function including apparatus according to an exemplary embodiment of the present invention;
Figures 5A and 5B are schematic block diagrams illustrating a communications system including a data management module according to respective first and second exemplary embodiments of the present invention; and
Figure 6 is a flow diagram illustrating the steps of a data management method according to an exemplary embodiment of the present invention.

Traditionally, all aspects of communications, such as multiple, different communications links/radios, reside within the communications system. Each of the communications links/radios is an independent system and usually dedicated to transmitting specific messages. The communications system is usually a dedicated system without much interaction, if any, with other platform systems and platform applications on the platform. If for example, the bandwidth on a communications link is constrained, the transmitting applications continues to transmit its data for off-board transmission, unaware of the performance of the network. As a result, the transmitting application's data may not reach its destination in a timely manner, or a transmitting application may overwhelm the off-board network router (e.g. buffers), leading to the loss of critical data. Bandwidth is a critical resource and platform applications would need to react to the changes, making efficient use of the available bandwidth. In aspects of the present invention, it is recognised that all systems /subsystems on a platform may work in concert to achieve mission objectives and to maintain the integrity of the platform. Specifically, in this case, the communications management system works in concert with platform applications, enabling them to make efficient use of the available bandwidth.

Thus, in one exemplary embodiment, it is envisaged that a current available bandwidth of a communications link used to transmit application data to a recipient node is monitored, in real time, and data representative of a current available bandwidth can be provided to enable application data to be adapted (by the transmitting platform application) to the current available bandwidth. In some cases, performance data representative of a current available bandwidth may be provided directly to a platform application, which may, as a result, adapt its data accordingly. In the case where a platform application does not have the capability to adapt its data, a QoS interface may instead cause the application data to be adapted accordingly.

The operational environment of a moving platform, in many different applications, comprises a plurality of nodes (e.g. fixed/mobile control station, manned and/or unmanned air vehicles) interacting with each other via different networks, exchanging, for example, Command and Control (C2), maintaining situational/environmental awareness, and cooperatively working together. In general, a node has multiple data links/radios to enable it to interact with other nodes via different networks, as required.

In the following description of the drawings, a communications management apparatus according to an exemplary embodiment of the invention will be described in relation to a UAV. However, it is to be understood that the present invention is not necessarily intended to be limited in this regard and, indeed, finds application in many other types of moving platform management systems in which it is required to manage communications in an intelligent manner and, for the avoidance of doubt, this would include road and sea-going vehicles, as well as manned aerial vehicles. The present invention also finds application in respect of the communications systems of mobile devices, such as mobile phones and the like, and this is to be understood throughout.

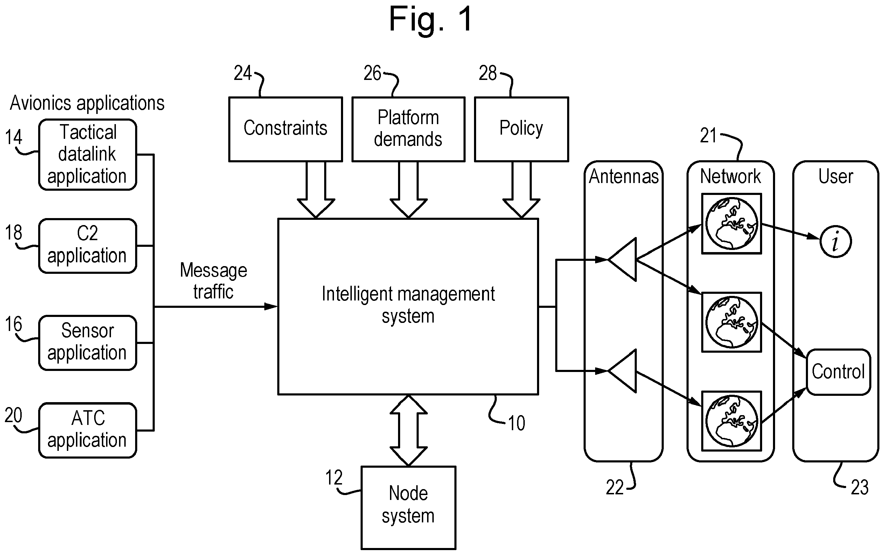

Referring to Figure 1 of the drawings, an intelligent management module 10, including apparatus according to an exemplary embodiment of an aspect of the present invention, is illustrated schematically at the centre of a typical UAV. The UAV comprises a plurality of systems/subsystems, including communications, navigation system, prognostics and health, etc. Thus, in the schematic diagram of Figure 1, the intelligent communications management module 10 is incorporated in a first node and depicted as being communicably coupled to other parts 12 of the vehicle. It can be seen from the diagram that two-way data communication is provided between the rest of the vehicle 12 and the intelligent management module 10. The node system 12 may comprise a plurality of systems/subsystems, possibly including, but not necessarily limited to, a prognostics and health system, a navigation system, a control authority, e.g. pilot or an on-board authority with executive decision functionality, a utilities management system, defensive aids system, data transfer and recording system, and an HMI (Human Machine Interface) system. Any and all of these systems/subsystems are configured to provide information, such as navigation data and detected threat, to the intelligent communications management module 10 for use in its decision making.

The intelligent communications management module 10 is also configured to receive data from a plurality of platform applications. Such avionics applications may, for example, comprise civil and/or military applications, such as tactical datalink applications 14, sensor applications 16 (e.g. video, images, etc), mission management applications 18 (for example, command and control data), and platform management applications 20 (e.g. health of node). It will be appreciated that this is not a comprehensive list of typical or possible applications from which the intelligent communications management system may receive data and others will be apparent to a person skilled in the art, depending upon the specific application within which the present invention is to be employed.

The intelligent communications management module 10 is configured to manage multiple communications links (generally depicted in Figure 1 as 'network' 21), which may include (but are not limited to) tactical data links, satellite links, free space optical links and other data links, as will be apparent to a person skilled in the art, and the communications management module may have different antenna types (depicted generally at 22) including, but not limited to, omni-directional and directional antennas, fixed or beam-steerable antennas. The antennas may be shared between communications links/radios, or with sensor systems. In the example illustrated in Figure 1, the communications from the platform antennas 22 are directed at an end user 23, for example, the remote pilot of a UAV located at a ground station. However, communications are not necessarily intended to be in any way limited in this regard.

Thus, the Intelligent Communications Management System has access to a wealth of information, such as mission environment and internal state of the node, and uses this information in its decision making. The environment represents the systems knowledge about the outside world, including network and link performance, other nodes in the network environment, dynamic threats, terrain, obstacles and weather data. The internal state is a representation of the internals of the system. It collects internal data from contributing sub-systems, such as real-time node attitude and position, current operational mode and applications' communications requirements, and it retains communications/information exchange plans, policies and information about installed resources (e.g. communications links, antennas).

A database (not shown) provides the intelligent communications management module 10 with knowledge about its mission environment and internal state, and uses this information in its decision making. The environmental data represents the system's knowledge about the outside world, including network and link performance, other nodes in the network environment, dynamic threats, terrain, obstacles and weather data. The internal state is a representation of the internal sub-systems of the system. The database collects internal data from contributing sub-systems, such as real-time node attitude and position, current operational mode and the communications requirements of individual applications, and it retains communications/information exchange plans, policies and information about installed resources (e.g. communication systems, antennas). For example, the antenna gain patterns for each installed antenna on a node would be stored on each node, in a database for example, to be used by the intelligent communications management module 10 in respect of, for example, antenna selection. In this example, the antenna gain patterns are mapped with respect to the body reference frame of the node, i.e. location of the antenna on the node.

It will be appreciated that the term "database" used above, is used simply to define one or more repositories for the required data. In one exemplary embodiment, the database may be a single repository, provided on the platform to be accessed by the intelligent management module 10 (and other functional components/sub-systems) in which all of the aforementioned data is stored for use thereby. In other exemplary embodiments, such a single repository may be used to store only a sub-set of the data, such as policies and installed antenna performance, to be accessed as required, with data that changes dynamically during a flight or mission, such as node position and operational mode, being sent directly from a relevant part of the overall platform management system to the intelligent communications management module.

Also illustrated in Figure 1, are data inputs representative of constraints 24, platform demands 26, and policy 28. These factors and the manner in which data representative thereof can be obtained will be known to a person skilled in the art. The policy 28, for example, may be designed by the network designer. A copy of this policy may reside within the intelligent management module 10, or accessible thereby. The policy contains a set of rules that, for example, define how links and antennas can be used, what action to take in the event of a hardware fault and/or loss of signal, and how platform applications can be served to support the mission. Such rules may be expressed as condition-action pairs (i.e. IF condition THEN action) and/or in look-up tables.

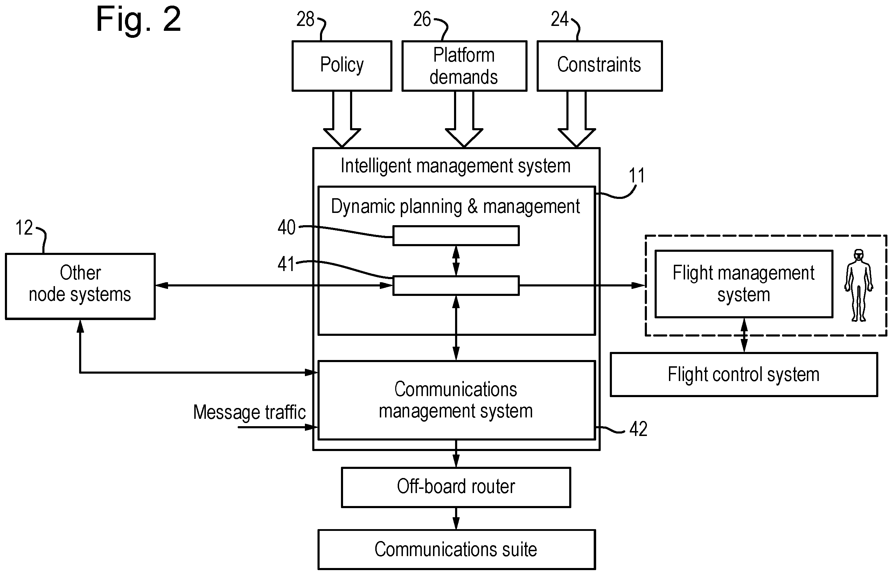

Referring now to Figure 2 of the drawings, the intelligent management module 10 comprises a dynamic planning and management module 11 and a communications management system 42. The communications management system 42 is concerned with low-level decision making. It manages the communications links and antennas, and works in concert with platform applications to adapt to the prevailing network conditions. For example, it is concerned with dynamically steering messages, sent by the transmitting platform application, via the most appropriate communications link, as well as antenna, in the most expedient fashion, in terms of latency, bandwidth, security and cost, whilst considering the communications requirements of the applications, current network performance, communications resource availability and preferences of the system designer and platform. When it is unable to resolve certain communications issues, it is configured to generate a request for the dynamic planning and management module 11 to modify plans in order to meet platform demands (i.e. higher-level planning).

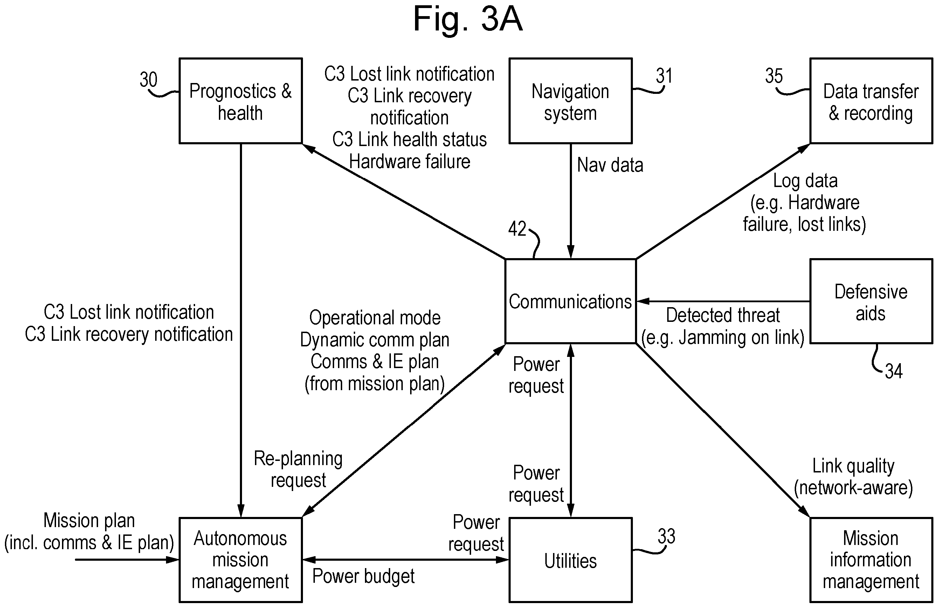

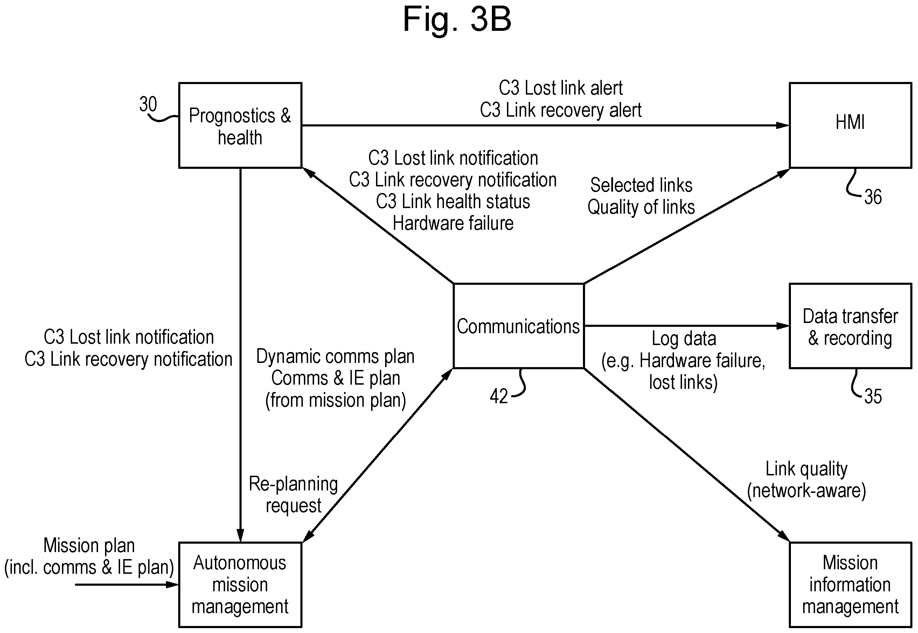

As in exemplary embodiments of the present invention (and as illustrated in Figures 2, 3A and 3B of the drawings), the intelligent communications management system 10 works cooperatively with the rest of the platform's systems/subsystems to achieve the mission goal: to provide information for situational awareness and safety purposes, and to receive information used in its decision making. In other words, at least parts of the node system 12 are communicably coupled to the communications management system 42 and the dynamic planning and management module 11. The communications module 42 is configured to monitor and evaluate current network performance, so it is network-aware, and provision is made in exemplary embodiments of the invention to use such network-awareness to enable platform applications (or a QoS interface associated therewith) to dynamically adapt and respond to varying available bandwidth of a communications link being used thereby.

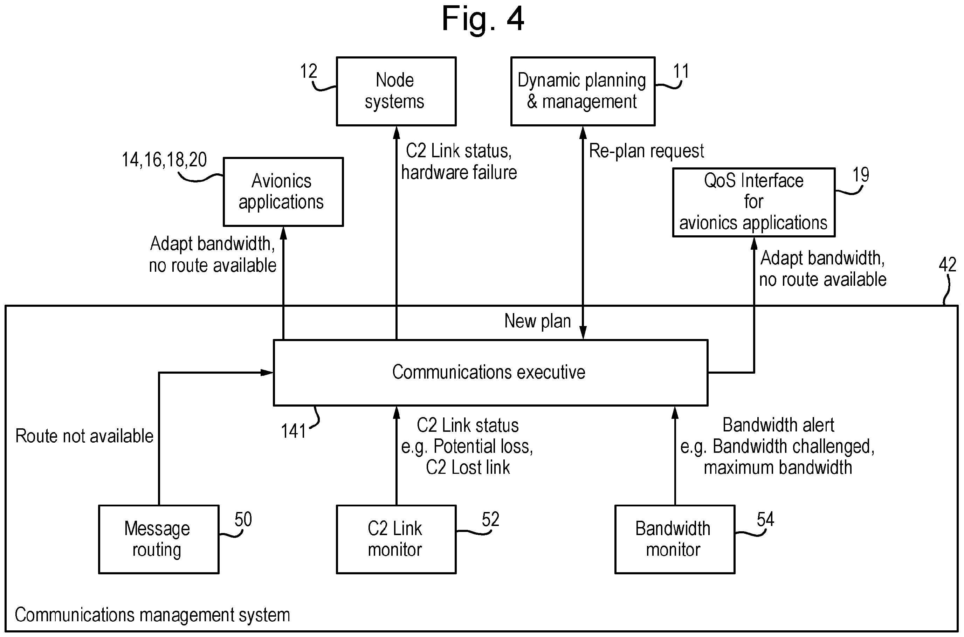

It can be seen from Figures 3A and 3B of the drawings, that the communications management module 42 receives a large quantity of different information from parts of the node, which it can use in its decision-making processes, and Figures 3A and 3B depict schematically this interaction for air-based systems and ground-based systems/airborne control station respectively. As explained above, the node system 12 may comprise one or more prognostics and health system 30, a navigation system 31, a control authority 32, e.g. pilot or an on-board authority with executive decision functionality, a utilities management system 33, defensive aids system 34, data transfer and recording system 35, and a HMI (Human Machine Interface) 36. Referring to Figure 4 of the drawings, in one exemplary embodiment of the invention, a Communications Executive function 141 is provided within the communications management system 42 to enable it to interface with components internal and external to the communications management system 42. Internal components of the communications management system 42 include a message routing module 50, a C2 (command and control) monitor 52 and a bandwidth monitor 54. The Communications Executive function 141 is configured to manage plan requests and receive new plans (in some exemplary embodiments), work with platform applications 14, 16, 18, 20 and/or QoS interface 19 for platform applications, receive health reports and report health issues that may have an impact on a mission. In general, if the communications management module 42 cannot adapt to meet current platform demands using integrated low-level planning functionality, then higher-level planning, via the Communications Executive function 141 is invoked. In this case, higher level planning may comprise the generation of a re-plan request to the dynamic planning and management system as mentioned above, or it may comprise adapting the information of a platform application (at a local, lower level), without recourse to the dynamic planning and management system, for example.

Networks can be volatile and available bandwidth can significantly change, without prior warning. Thus, as previously explained, the bandwidth can change dynamically due to, for example, interference, jamming and weather. Unlike wired mediums, such as Ethernet and the like, current off-board communications links have a much limited bandwidth. For example, current tactical data links have limited bandwidth, of the order of kilobits/second (kbps). Effective communications can be quickly hindered if the bandwidth is further constrained due to dynamic environmental factors and, in this case, the data management module according to an exemplary embodiment of the present invention is intended to alleviate the problems.

For example, if the message routing function 50 cannot meet current platform/mission demands, due to a degradation in link quality, or even the loss of a communications link, caused by a banking manoeuvre performed by the aircraft, poor weather conditions, jamming, interference or indeed any other reason, information management in accordance with an exemplary embodiment of the present invention may be invoked in order to efficiently manage available network bandwidth used by applications when resources become limited.

The Data Management module uses its understanding of the bandwidth requirement for the application and current link performance to make an informed decision whether to alert the application to a change in available bandwidth. For platform applications that do not have the in-built capability to adapt their information, for example, it is envisaged that a Quality of Service (QoS) interface between the platform application and the Data Management module could provide the capability to perform such adaptation. For example, in respect of a video application, the resolution of the video data can be reduced and lower resolution video transmitted when the bandwidth degrades, as part of an acceptable QoS. In another example, for constrained bandwidth, the video application may select to transmit only images or even just tracks, as part of a reduced level of service. When network conditions improve, the information can be further optimised, by sending full resolution video for example. It will be appreciated that such data adaptation may occur in isolation, in order to adapt to a temporary degradation of service, or it may be part of a wider plan in which a revised communications plan has been requested and received from the dynamic planning and management system, and the present invention is not necessarily intended to be limited in this regard.

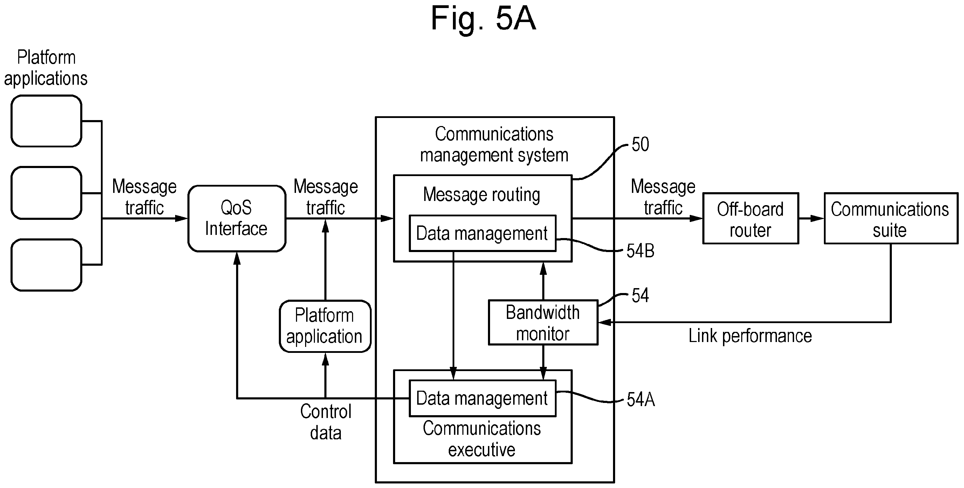

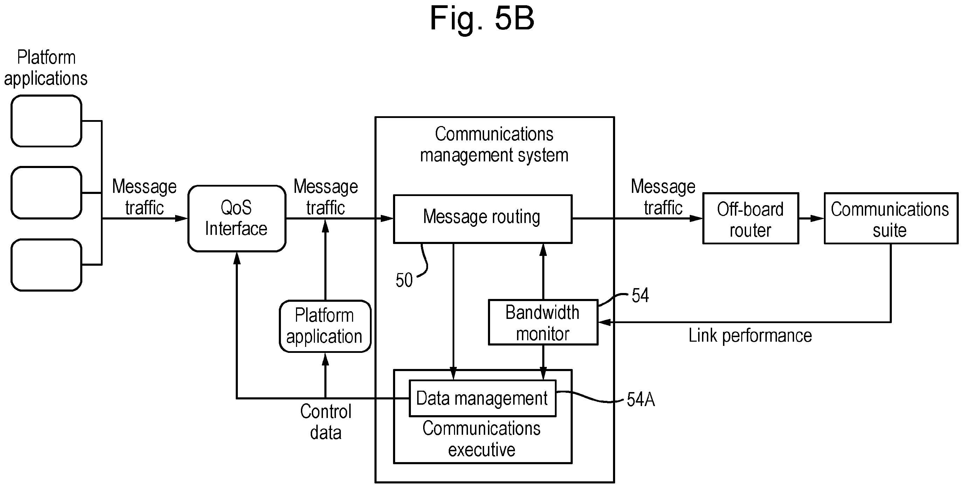

Referring to Figures 5A and 5B of the drawings, and as explained above, the Communications Management System 42 includes a Communications Executive function 141 for facilitating higher level communications planning as described above. As illustrated in Figure 5A of the drawings, a data management module 54A resides within the communications Executive function 141 and another data management module 54B resides within the message routeing function 50; the bandwidth monitor 54 and message routeing function 50 interface with the Communications Executive function 141. In Figure 5B of the drawings, in other exemplary embodiments, a data management module 54A resides within the Communications Executive function 141, and the bandwidth monitoring function 54 and the message routeing function 50 interface with the Communications Executive function 141.

In normal use, message traffic from the various applications 14, 16, 18, 20 is transmitted via the message router 50 to an off-board router for wireless transmission over a selected communications link. In some cases, the message traffic from at least some applications may be transmitted to the message router 50 via a Quality of Services (QoS) interface 19. The data management module 54a works in association with the platform applications 14, 16, 18, 20 (and optionally the QoS interface 19) to enable them to dynamically adapt their information to a new QoS level or scale to reduced level of service, according to control data received from the bandwidth monitor 54, to make best use of the available bandwidth. As a result, the applications become "network-aware". Optimising the bandwidth usage may include techniques such as compression and adapting the transmission data rate. A platform application can specify an acceptable bandwidth range. The application adapts to the specified point within this range that the network provides, which may change with time. In effect, the data management module "interfaces" with platform applications and/or QoS interface to enable them to adapt to prevailing network conditions by adapting their information, for example. In some cases, the applications themselves will have the capability to adapt their information for transmission, in accordance with control data received from the data management module 54A. In other cases, where an application does not have this capability for example, it is envisaged that adaptation may be effected by the QoS interface 19. In another example, the message routing function may interact with the platform applications and/or QoS interface, via the data management module within the communications Executive, to enable them to make best use of the bandwidth on the selected communications link. For example, a selected communications link may only be able to support a number of message flows (i.e. message traffic from multiple platform applications), if one of the message flows has its information adapted. Based on its understanding of what the bandwidth requirement is for that message flow, it informs the data management module, of what level of service it can provide for example, and for the data management module to make the platform application or QoS interface aware, so that they can adapt accordingly.

Either way, the application can specify the minimum level of service it is willing to accept and the maximum level of service it is able to utilise, i.e. an acceptable bandwidth range. This information can be provided to the communications management system dynamically in-mission, included in the message itself, for example, via a wrapper or within the message payload, or it could be provided in a separate message, or it could even be provided pre-mission in look-up tables, for example.

The data management module 54A or 54B uses its understanding of the bandwidth requirement for the application and current link performance to make an 'informed' decision as to whether or not it is appropriate to alert the application (or respective QoS interface) to a change in available bandwidth.

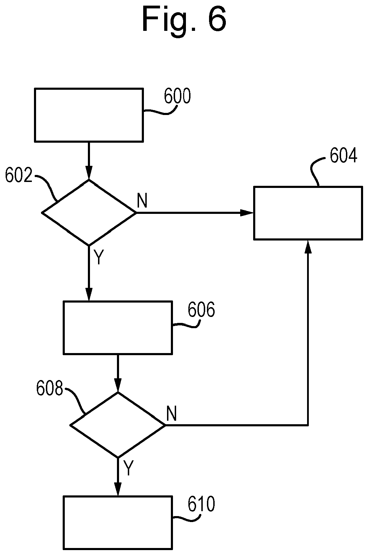

Referring now to Figure 6 of the drawings, a method according to an exemplary embodiment of the present invention starts (at step 600) with a signal or other data from the bandwidth monitor 54 that there has been a change in available bandwidth on a current data link being used for application data transmission. The change in bandwidth may be due to a degradation in the link, or the link may have been lost altogether, or the change may also be an improvement in network bandwidth. Thus, the next step (602) is to determine whether or not the current communications link is still available for use, i.e. if the link has been completely lost. If it is not available, the method finds an alternative solution (at step 604), such as finding an alternative communications link. Otherwise, the existing communications link may be used. The next step (606) determines the suitability of the current communications links to support the communications requirements of the application, based on its understanding of the current available bandwidth (e.g. using data from the bandwidth monitor 54) and the bandwidth requirement of the application (i.e. acceptable bandwidth range). The method determines, at step 608, if the application data can adapt, i.e. is the current bandwidth within the application's acceptable bandwidth range, in order to optimise the available network resources. If not, the method finds an alternative solution (at step 604) such as finding an alternative communications link. However, if it is determined that the application data can be effectively adapted, a signal representative thereof is transmitted to the respective application (or the QoS interface 19) at step 610 to effect the required adaptation of data for transmission.

It will be apparent to a person skilled in the art, from the foregoing description, that modifications and variations can be made to the described embodiments without departing from the scope of the present invention as defined by the appended claims.

## Claims

1. A data communications apparatus for a vehicle, the apparatus comprising a plurality of platform applications (14, 16, 18, 20), a communications system (42), and a data management module (54A, 54B), the communications system being configured to cause data from each said platform application to be transmitted, via wireless data communication, to at least one recipient node (23) via a respective one or more allocated or associated communication links of a plurality of supported communications links (22), said data management module being configured to:
- receive performance data indicative of a current available bandwidth of each communications link allocated to or associated with said platform applications;
- for each said platform application, identify data to be transmitted thereby to a recipient node, and compare a bandwidth requirement of data to be transmitted with the current available bandwidth of the respective communications link allocated thereto or associated therewith; and
- in the event that, as a result of said comparing, the current available bandwidth of the respective communications link is determined to be insufficient in relation to the bandwidth requirement of one of its associated platform applications, generate information data and transmit said information data to the platform application, or a quality of service interface (19) associated therewith;
wherein each said platform application, or a quality of service interface associated therewith, is configured, upon receipt of said information data, to adapt at least one parameter of its respective application data to said current available bandwidth of its respective communications link for transmission to a recipient node.

2. Apparatus according to claim 1, wherein said data management module is configured to use said performance data to identify a change in available bandwidth of said communications link, determine if said current available bandwidth is within an acceptable bandwidth range of the platform application and, if so, generate a control signal including said information data, said control signal being configured, upon receipt thereof by the platform application, to cause the platform application to adapt at least one parameter of its respective application data to said current available bandwidth of its respective communications link for transmission to a recipient node.

3. Apparatus according to claim 1 or claim 2, wherein said data management module is configured to provide, to the platform application, data indicative of said current available bandwidth, thereby enabling the platform application to adapt said at least one parameter of the application data to said current available bandwidth.

4. Apparatus according to any of the preceding claims, wherein said data management module is configured to provide, to a Quality of Service interface associated with the platform application, data indicative of said current available bandwidth.

5. Apparatus according to any of the preceding claims, wherein said performance data comprises current bandwidth data in respect of said respective communications link.

6. Apparatus according to any of claims 1 to 4, wherein said performance data comprises a performance indicator representative of a current status of said respective communications link.

7. Apparatus according to claim 6, wherein said performance indicator comprises one of a plurality of discrete statuses.

8. Apparatus according to any of the preceding claims, wherein adapting said at least one parameter of said platform application data comprises compressing said data.

9. Apparatus according to any of the preceding claims, wherein adapting said at least one parameter of said platform application data comprises adapting the transmission rate of the platform application from which said data is received.

10. Apparatus according to any of the preceding claims, wherein adapting said at least one parameter of said platform application data comprises selecting a type or portion of said data to be transmitted.

11. Apparatus according to any of the preceding claims, comprising a bandwidth monitoring module (54) for monitoring the current available bandwidth of the respective one or more communications links allocated or associated with said plurality of platform applications, wherein said data management module is configured to receive data from said bandwidth monitoring module and detect a change in current available bandwidth of said one or more communications links.

12. Apparatus according to claim 11, wherein said data management module is further configured to determine if said current available bandwidth is within an acceptable bandwidth range of each respective platform application and, if so, generate a control signal including said information data, said control signal being configured, upon receipt thereof by the platform application, to cause the platform application to adapt at least one parameter of its respective application data to said current available bandwidth of its respective communications link for transmission to a recipient node.

13. A method for operating a data communications apparatus for management of data communications in a vehicle, the data communications apparatus comprising a plurality of platform applications (14, 16, 18, 20) and a communications system (42), the communications system being configured to cause data from each said platform application to be transmitted, via wireless data communication, to at least one recipient node (23) via a respective one or more allocated or associated communication links (22) of a plurality of supported communications links, the method comprising:
- receiving performance data indicative of a current available bandwidth of each communications link allocated to or associated with said platform applications;
- identifying, for each platform application, data to be transmitted thereby to a recipient node, and comparing a bandwidth requirement of data to be transmitted with the current available bandwidth of the respective communications link allocated thereto or associated therewith;
- in the event that, as a result of said comparing, a current available bandwidth of the respective communications link is determined to be insufficient in relation to the bandwidth requirement of one of its associated platform applications, generating information data and transmitting said information data to the platform application, or a quality of service interface (19) associated therewith;
- adapting, by the platform application, or said quality of service interface associated therewith, upon receipt of said information data, at least one parameter of its respective application data to said current available bandwidth of its respective communications link for transmission to a recipient node.

## Patentansprüche

1. Datenkommunikationsvorrichtung für ein Fahrzeug, wobei die Vorrichtung mehrere Plattformanwendungen (14, 16, 18, 20), ein Kommunikationssystem (42) und ein Datenverwaltungsmodul (54A, 54B) umfasst, wobei das Kommunikationssystem dafür konfiguriert ist, das Übertragen von Daten mittels drahtloser Datenkommunikation von jeder der Plattformanwendungen über einen entsprechenden oder mehrere entsprechende zugewiesene oder zugeordnete Kommunikationslinks aus mehreren unterstützten Kommunikationslinks (22) an mindestens einen Empfängerknoten (23) zu veranlassen, wobei das Datenverwaltungsmodul für Folgendes konfiguriert ist:
- Empfangen von Leistungsdaten, die eine gegenwärtig verfügbare Bandbreite jedes Kommunikationslinks, der den Plattformanwendungen zugewiesen oder zugeordnet ist, angeben,
- für jede Plattformanwendung: Identifizieren von Daten, die durch diese an einen Empfängerknoten zu übertragen sind, und Vergleichen einer Bandbreitenanforderung von zu übertragenden Daten mit der gegenwärtig verfügbaren Bandbreite des entsprechenden Kommunikationslinks, der dieser zugewiesen oder zugeordnet ist, und
- für den Fall, dass die gegenwärtig verfügbare Bandbreite des entsprechenden Kommunikationslinks im Ergebnis des Vergleichs als im Verhältnis zur Bandbreitenanforderung einer seiner zugeordneten Plattformanwendungen unzureichend bestimmt wird: Erzeugen von Informationsdaten und Übertragen der Informationsdaten an die Plattformanwendung oder eine ihr zugeordnete Dienstgüteschnittstelle (19),
wobei jede Plattformanwendung oder eine ihr zugeordnete Dienstgüteschnittstelle dafür konfiguriert ist, auf den Empfang der Informationsdaten hin mindestens einen Parameter ihrer entsprechenden Anwendungsdaten an die gegenwärtig verfügbare Bandbreite ihres entsprechenden Kommunikationslinks zur Übertragung an einen Empfängerknoten anzupassen.

2. Vorrichtung nach Anspruch 1, wobei das Datenverwaltungsmodul dafür konfiguriert ist, die Leistungsdaten zu verwenden, um eine Veränderung der verfügbaren Bandreite des Kommunikationslinks zu identifizieren, zu bestimmen, ob die gegenwärtig verfügbare Bandbreite in einem zulässigen Bereich der Plattformanwendung liegt, und wenn ja, ein Steuersignal zu erzeugen, das die Informationsdaten enthält, wobei das Steuersignal dafür konfiguriert ist, auf den Empfang desselben durch die Plattformanwendung hin die Plattformanwendung zu veranlassen, mindestens einen Parameter ihrer entsprechenden Anwendungsdaten an die gegenwärtig verfügbare Bandbreite ihres entsprechenden Übertagungslinks zur Übertragung an einen Empfängerknoten anzupassen.

3. Vorrichtung nach Anspruch 1 oder Anspruch 2, wobei das Datenverwaltungsmodul dafür konfiguriert ist, für die Plattformanwendung Daten bereitzustellen, welche die gegenwärtig verfügbare Bandbreite angeben, wodurch die Plattformanwendung in die Lage versetzt wird, den mindestens einen Parameter der Anwendungsdaten an die gegenwärtig verfügbare Bandbreite anzupassen.

4. Vorrichtung nach einem der vorhergehenden Ansprüche, wobei das Datenverwaltungsmodul dafür konfiguriert ist, für eine der Plattformanwendung zugeordnete Dienstgüteschnittstelle Daten bereitzustellen, welche die gegenwärtig verfügbare Bandbreite angeben.

5. Vorrichtung nach einem der vorhergehenden Ansprüche, wobei die Leistungsdaten Daten der gegenwärtigen Bandbreite hinsichtlich des entsprechenden Kommunikationslinks umfassen.

6. Vorrichtung nach einem der Ansprüche 1 bis 4, wobei die Leistungsdaten einen Leistungsanzeiger umfassen, der einen gegenwärtigen Status des entsprechenden Kommunikationslinks darstellt.

7. Vorrichtung nach Anspruch 6, wobei der Leistungsanzeiger einen von mehreren einzelnen Status umfasst.

8. Vorrichtung nach einem der vorhergehenden Ansprüche, wobei das Anpassen des mindestens einen Parameters der Plattformanwendungsdaten das Komprimieren der Daten umfasst.

9. Vorrichtung nach einem der vorhergehenden Ansprüche, wobei das Anpassen des mindestens einen Parameters der Plattformanwendungsdaten das Anpassen der Übertragungsrate der Plattformanwendung umfasst, von der die Daten empfangen werden.

10. Vorrichtung nach einem der vorhergehenden Ansprüche, wobei das Anpassen des mindestens einen Parameters der Plattformanwendungsdaten das Auswählen einer Art oder eines Abschnitts der zu übermittelnden Daten umfasst.

11. Vorrichtung nach einem der vorhergehenden Ansprüche, ein Bandbreiten-Überwachungsmodul (54) zum Überwachen der gegenwärtig verfügbaren Bandbreite des entsprechenden einen oder der entsprechenden mehreren Kommunikationslinks umfassend, die den mehreren Plattformanwendungen zugewiesen oder zugeordnet sind, wobei das Datenverwaltungsmodul dafür konfiguriert ist, Daten von dem Bandbreiten-Überwachungsmodul zu empfangen und eine Veränderung der gegenwärtig verfügbaren Bandbreite des einen oder der mehreren Kommunikationslinks zu erkennen.

12. Vorrichtung nach Anspruch 11, wobei das Datenverwaltungsmodul ferner dafür konfiguriert ist zu bestimmen, ob die gegenwärtig verfügbare Bandbreite in einem akzeptablen Bandbreitenbereich jeder entsprechenden Plattformanwendung liegt, und, wenn ja, ein Steuersignal zu erzeugen, das die Informationsdaten enthält, wobei das Steuersignal dafür konfiguriert ist, auf seinen Empfang durch die Plattformanwendung hin die Plattformanwendung zu veranlassen, mindestens einen Parameter ihrer entsprechenden Anwendungsdaten an die gegenwärtig verfügbare Bandbreite ihres entsprechenden Kommunikationslinks zur Übertragung an einen Empfängerknoten anzupassen.

13. Verfahren zum Betreiben einer Datenkommunikationsvorrichtung zum Verwalten von Datenkommunikationen in einem Fahrzeug, wobei die Datenkommunikationsvorrichtung mehrere Plattformanwendungen (14, 16, 18, 20) und ein Kommunikationssystem (42) umfasst, wobei das Kommunikationssystem dafür konfiguriert ist, das Übermitteln von Daten mittels drahtloser Datenkommunikation von jeder der Plattformanwendungen über einen entsprechenden oder mehrere entsprechende zugewiesene oder zugeordnete Kommunikationslinks (22) aus mehreren unterstützten Kommunikationslinks an mindestens einen Empfängerknoten (23) zu veranlassen, wobei das Verfahren Folgendes umfasst:
- Empfangen von Leistungsdaten, die eine gegenwärtig verfügbare Bandbreite jedes den Plattformanwendungen zugewiesenen oder zugeordneten Kommunikationslinks angeben,
- für jede Plattformanwendung: Identifizieren von Daten, die durch diese an einen Empfängerknoten zu übertragen sind, und Vergleichen einer Bandbreitenanforderung der zu übertragenden Daten mit der gegenwärtig verfügbaren Bandbreite des entsprechenden Kommunikationslinks, der dieser zugewiesen oder zugeordnet ist,
- für den Fall, dass eine gegenwärtig verfügbare Bandbreite des entsprechenden Kommunikationslinks im Ergebnis des Vergleichs als im Verhältnis zur Bandbreitenanforderung einer seiner zugeordneten Plattformanwendungen unzureichend bestimmt wird: Erzeugen von Informationsdaten und Übertragen der Informationsdaten an die Plattformanwendung oder eine ihr zugeordnete Dienstgüteschnittstelle (19),
Anpassen, durch jede Plattformanwendung oder ihr zugeordnete Dienstgüteschnittstelle, mindestens eines Parameters ihrer entsprechenden Anwendungsdaten an die gegenwärtig verfügbare Bandbreite ihres entsprechenden Kommunikationslinks zur Übertragung an einen Empfängerknoten.

## Revendications

1. Appareil de communication de données pour un véhicule, l'appareil comprenant une pluralité d'applications de plateforme (14, 16, 18, 20), un système de communication (42), et un module de gestion de données (54A, 54B), le système de communication étant configuré de manière à amener des données provenant de chaque dite application de plateforme à être transmises, par l'intermédiaire d'une communication de données sans fil, à au moins un nœud destinataire (23), par l'intermédiaire d'une ou plusieurs liaisons de communication allouées ou associées respectives d'une pluralité de liaisons de communication prises en charge (22), ledit module de gestion de données étant configuré de manière à :
- recevoir des données de performance indicatives d'une largeur de bande disponible en cours de chaque liaison de communication allouée ou associée auxdites applications de plateforme ;
- pour chaque dite application de plateforme, identifier des données à transmettre par conséquent à un nœud destinataire, et comparer une exigence de largeur de bande de données à transmettre, à la largeur de bande disponible en cours de la liaison de communication respective qui lui est allouée ou qui lui est associée ; et
- dans le cas où, suite à ladite étape de comparaison, la largeur de bande disponible en cours de la liaison de communication respective est déterminée comme étant insuffisante par rapport à l'exigence de largeur de bande de l'une de ses applications de plateforme associées, générer des données d'information et transmettre lesdites données d'information à l'application de plateforme, ou à une interface de qualité de service (19) qui lui est associée ;
dans lequel chaque dite application de plateforme, ou une interface de qualité de service qui lui est associée, est configurée, suite à la réception desdites données d'information, de manière à adapter au moins un paramètre de ses données d'application respectives, à ladite largeur de bande disponible en cours de sa liaison de communication respective, à des fins de transmission à un nœud destinataire.

2. Appareil selon la revendication 1, dans lequel ledit module de gestion de données est configuré de manière à utiliser lesdites données de performance en vue d'identifier une modification de la largeur de bande disponible de ladite liaison de communication, à déterminer si ladite largeur de bande disponible en cours est dans une plage de largeur de bande acceptable de l'application de plateforme et, le cas échéant, à générer un signal de commande incluant lesdites données d'information, ledit signal de commande étant configuré, suite à sa réception par l'application de plateforme, de manière à amener l'application de plateforme à adapter au moins un paramètre de ses données d'application respectives, à ladite largeur de bande disponible en cours de sa liaison de communication respective, à des fins de transmission à un nœud destinataire.

3. Appareil selon la revendication 1 ou 2, dans lequel ledit module de gestion de données est configuré de manière à fournir, à l'application de plateforme, des données indicatives de ladite largeur de bande disponible en cours, ce qui permet par conséquent à l'application de plateforme d'adapter ledit au moins un paramètre des données d'application à ladite largeur de bande disponible en cours.

4. Appareil selon l'une quelconque des revendications précédentes, dans lequel ledit module de gestion de données est configuré de manière à fournir, à une interface de qualité de service associée à l'application de plateforme, des données indicatives de ladite largeur de bande disponible en cours.

5. Appareil selon l'une quelconque des revendications précédentes, dans lequel lesdites données de performance comprennent des données de largeur de bande en cours relativement à ladite liaison de communication respective.

6. Appareil selon l'une quelconque des revendications 1 à 4, dans lequel lesdites données de performance comprennent un indicateur de performance représentatif d'un état en cours de ladite liaison de communication respective.

7. Appareil selon la revendication 6, dans lequel ledit indicateur de performance comprend un état discret parmi une pluralité d'états discrets.

8. Appareil selon l'une quelconque des revendications précédentes, dans lequel l'étape d'adaptation dudit au moins un paramètre desdites données d'application de plateforme comprend l'étape consistant à compresser lesdites données.

9. Appareil selon l'une quelconque des revendications précédentes, dans lequel l'étape d'adaptation dudit au moins un paramètre desdites données d'application de plateforme comprend l'étape consistant à adapter le débit de transmission de l'application de plateforme à partir de laquelle lesdites données sont reçues.

10. Appareil selon l'une quelconque des revendications précédentes, dans lequel l'étape d'adaptation dudit au moins un paramètre desdites données d'application de plateforme comprend l'étape consistant à sélectionner un type ou une partie desdites données à transmettre.

11. Appareil selon l'une quelconque des revendications précédentes, comprenant un module de surveillance de largeur de bande (54) destiné à surveiller la largeur de bande disponible en cours de ladite une ou desdites plusieurs liaisons de communication respectives allouées ou associées à ladite pluralité d'applications de plateforme, dans lequel ledit module de gestion de données est configuré de manière à recevoir des données en provenance dudit module de surveillance de largeur de bande et à détecter une modification de la largeur de bande disponible en cours de ladite une ou desdites plusieurs liaisons de communication.

12. Appareil selon la revendication 11, dans lequel ledit module de gestion de données est en outre configuré de manière à déterminer si ladite largeur de bande disponible en cours est dans une plage de largeur de bande acceptable de chaque application de plateforme respective et, le cas échéant, à générer un signal de commande incluant lesdites données d'information, ledit signal de commande étant configuré de manière à, suite à sa réception par l'application de plateforme, amener l'application de plateforme à adapter au moins un paramètre de ses données d'application respectives, à ladite largeur de bande disponible en cours de sa liaison de communication respective, à des fins de transmission à un nœud destinataire.

13. Procédé d'exploitation d'un appareil de communication de données dans le cadre de la gestion de communications de données dans un véhicule, l'appareil de communication de données comprenant une pluralité d'applications de plateforme (14, 16, 18, 20) et un système de communication (42), le système de communication étant configuré de manière à amener des données provenant de chaque dite application de plateforme à être transmises, par l'intermédiaire d'une communication de données sans fil, à au moins un nœud destinataire (23), par l'intermédiaire d'une ou plusieurs liaisons de communication allouées ou associées respectives (22) d'une pluralité de liaisons de communication prises en charge, le procédé comprenant les étapes ci-dessous consistant à :
- recevoir des données de performance indicatives d'une largeur de bande disponible en cours de chaque liaison de communication allouée ou associée auxdites applications de plateforme ;
- identifier, pour chaque application de plateforme, des données à transmettre par conséquent à un nœud destinataire, et comparer une exigence de largeur de bande de données à transmettre, à la largeur de bande disponible en cours de la liaison de communication respective qui lui est allouée ou qui lui est associée ;
- dans le cas où, suite à ladite étape de comparaison, une largeur de bande disponible en cours de la liaison de communication respective est déterminée comme étant insuffisante par rapport à l'exigence de largeur de bande de l'une de ses applications de plateforme associées, générer des données d'information et transmettre lesdites données d'information à l'application de plateforme, ou à une interface de qualité de service (19) qui lui est associée ;
- adapter, par le biais de l'application de plateforme, ou de ladite interface de qualité de service qui lui est associée, suite à la réception desdites données d'information, au moins un paramètre de ses données d'application respectives, à ladite largeur de bande disponible en cours de sa liaison de communication respective, à des fins de transmission à un nœud destinataire.
